# EUROPEAN PATENT APPLICATION

(11) **EP 3 627 309 A1**
(43) Date of publication of application: **25.03.2020**
(21) Application number: 17910117.5
(22) Date of filing: 16.10.2017
(51) Int. Cl.: G06F 3/14

(54) **APPLICATION CONTROL METHOD AND DEVICE FOR DUAL-SCREEN TERMINAL**

(30) Priority: 17.05.2017 CN 201710349700
(71) Applicant: ZTE Corporation, Shenzhen, Guangdong 518057 (CN)
(72) Inventor: ZHAO, Dongxiao, Shenzhen Guangdong 518057 (CN)
(74) Representative: Petraz, Gilberto Luigi
(86) International application number: PCT/CN2017/106271
(87) International publication number: WO 2018/209887

(57) **Abstract**

Disclosed are an application control method and device for a dual-screen terminal, relating to the field of terminals. The method includes: acquiring an association relationship between a first application and a second application in a dual-screen terminal (S101); starting the second application on a second screen based on the association relationship, if the dual-screen terminal detects that a user triggers a system event of the first application on a first screen (S102); and controlling, by the dual-screen terminal, the second application or the first application to perform a corresponding operation based on an operation performed by the user on the first application or the second application, after the first application and the second application are started (S103). The above solution can improve operation speed of a user and enhance user experience.

## Description

### Field of the Invention

The present disclosure relates to the field of terminals, and in particular, to an application control method for a dual-screen terminal and an application control device for a dual-screen terminal.

### Background of the Invention

The two screens of an existing dual-screen terminal can be combined into and displayed as one large screen, or the two screens can respectively display different applications. In the case that the two screens are combined into one screen, the processing method is the same as that for a single screen, but this processing method is not suitable for scenarios such as video playback. In the case that the two screens respectively display different applications, the two screens are not associated with each other and cannot achieve a synergistic effect, and thus cannot ensure improved user experience.

In other words, both the existing dual-screen terminals (such as dual-screen mobile phones) and dual screens cannot exploit the benefit of the two screens, and there is no strong association between applications on the two screens. For some media playback applications or scenarios involving interaction between two applications, there is currently no particularly good general method, and the applications need to be adapted to the two screens separately, which, for a third-party application, is basically impossible. This greatly limits improvements in experience of using dual-screen mobile phones.

### Summary of the Invention

An application control method for a dual-screen terminal and an application control device for a dual-screen terminal provided by embodiments of the present disclosure solve the problem that a user cannot have an improved user experience when operating dual-screen applications.

An application control method for a dual-screen terminal provided by an embodiment of the present disclosure includes:
acquiring an association relationship between a first application and a second application in a dual-screen terminal;
starting the second application on a second screen based on the association relationship, if the dual-screen terminal detects that a user triggers a system event of the first application on a first screen; and
controlling, by the dual-screen terminal, the second application or the first application to perform a corresponding operation based on an operation performed by the user on the first application or the second application, after the first application and the second application are started.

Preferably, the first application is a video player, and the second application is a file manager. The step of starting the second application on a second screen based on the association relationship if the dual-screen terminal detects that a user triggers a system event of the first application on a first screen includes:
searching a file manager associated with the video player based on the association relationship and starting the file manager on the second screen, if it is detected that the user triggers a system event in which the video player is started or operated.

Preferably, the step of controlling, by the dual-screen terminal, the second application or the first application to perform a corresponding operation based on an operation performed by the user on the first application or the second application includes:
controlling, if it is detected that the user uses the video player to perform an operation on a video file, the file manager to open a file directory where the video file is located; and
controlling, if it is detected that the user uses the file manager to perform an operation on a file directory of a video file, the video player to perform a corresponding operation on the video file.

Preferably, the first application is chat software, and the second application is a file manager. The step of starting the second application on a second screen based on the association relationship if the dual-screen terminal detects that a user triggers a system event of the first application on a first screen includes:
searching a file manager associated with the chat software based on the association relationship and starting the file manager on the second screen, if it is detected that the user triggers a system event in which the chat software is started or operated.

Preferably, the step of controlling, by the dual-screen terminal, the second application or the first application to perform a corresponding operation based on an operation performed by the user on the first application or the second application includes:
controlling the file manager to open a picture directory, if it is detected that the user performs an operation on a function increase button in the chat software; and
sending, if it is detected that the user performs an operation on a picture in the file manager, the picture to the chat software and controlling the chat software to display the picture in a current chat window.

A storage medium provided by an embodiment of the present disclosure includes a program stored thereon for implementing the above application control method for a dual-screen terminal.

An application control device for a dual-screen terminal provided by an embodiment of the present disclosure includes:
an association module, configured to acquire an association relationship between a first application and a second application in a dual-screen terminal;
a startup module, configured to start the second application on a second screen based on the association relationship, if the dual-screen terminal detects that a user triggers a system event of the first application on a first screen; and
a processing module, configured to control the second application or the first application to perform a corresponding operation based on an operation performed by the user on the first application or the second application, after the first application and the second application are started.

Preferably, the first application is a video player, and the second application is a file manager. The startup module, if detecting that the user triggers on the first screen a system event in which the video player is started or operated, searches a file manager associated with the video player based on the association relationship and starts the file manager on the second screen.

Preferably, the processing module, if detecting that the user uses the video player to perform an operation on a video file, controls the file manager to open a file directory where the video file is located; and the processing module, if detecting that the user uses the file manager to perform an operation on a file directory of a video file, controls the video player to perform a corresponding operation on the video file.

Preferably, the first application is chat software, and the second application is a file manager. The startup module, if detecting that the user triggers on the first screen a system event in which the chat software is started or operated, searches a file manager associated with the chat software based on the association relationship and starts the file manager on the second screen.

Preferably, the processing module, if detecting that the user performs an operation on a function increase button in the chat software, controls the file manager to open a picture directory; and the processing module, if detecting that the user performs an operation on a picture in the file manager, sends the picture to the chat software and controls the chat software to display the picture in a current chat window.

Technical solutions provided by the embodiments of the present disclosure have the following beneficial effects.
1. According to the embodiments of the present disclosure, by associating two applications, while one of the applications is opened on a screen, the other application can be opened on another screen, which can improve the operation speed of a user and thus improve user experience.
2. According to the embodiments of the present disclosure, while an operation is performed on an application on a screen, the other application on another screen can perform an associated operation, which can improve the operation speed of a user and thus improve user experience.

### Brief Description of the Drawings

The drawings described herein are provided for a further understanding of the present disclosure, and constitute a part of the present disclosure. Exemplary embodiments and descriptions thereof of the present disclosure are intended for explaining the present disclosure, and do not constitute inappropriate limitations to the present disclosure. In the drawings:
Fig. 1 is a flowchart of an application control method for a dual-screen terminal according to an embodiment of the present disclosure;
Fig. 2 is a block diagram of an application control device for a dual-screen terminal according to an embodiment of the present disclosure; and
Fig. 3 is a schematic diagram showing use of application control for a dual-screen terminal according to an embodiment of the present disclosure.

### Detailed Description of the Embodiments

Preferred embodiments of the present disclosure are described in detail below with reference to the accompanying drawings. It shall be appreciated that the preferred embodiments described below are intended only for illustrating and explaining rather than limiting the present disclosure.

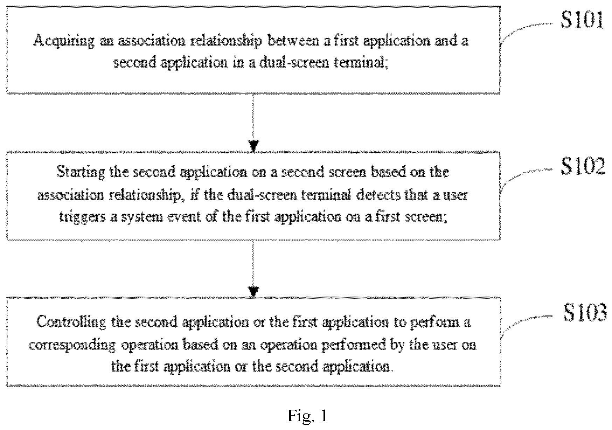

Fig. 1 is a flowchart of an application control method for a dual-screen terminal provided by an embodiment of the present disclosure. As shown in Fig. 1, the method includes the following steps.

In step S101, an association relationship between a first application and a second application in a dual-screen terminal is acquired.

Prior to step S101, the dual-screen terminal establishes an association relationship between the first application and the second application. The association relationship includes an application association, such as an association between a video player and a file manager. The association relationship also includes a state association, such as an association between opening of a video file by a video player and opening a directory where a currently playing video file is located by the file manager.

In step S102, the dual-screen terminal, if detecting that a user triggers a system event of the first application on a first screen, starts the second application on a second screen based on the association relationship.

Step S102 includes finding the second application by searching the association relationship when the dual-screen terminal detects a system event of the first application, and starting the second application on another screen.

The system event may be a system event in which the user starts the first application. That is to say, after the first application is started on the first screen, the second application associated with the first application will be started on the second screen.

The system event may also be a system event in which the user operates the first application. That is to say, after the first application is started on the first screen, if the first application performs a certain operation, then the second application associated with the first application will be started on the second screen.

For example, the first application is a video player, and the second application is a file manager. If it is detected that the user triggers on the first screen a system event in which the video player is started or operated, then a file manager associated with the video player is searched based on the association relationship, and the file manager is started on the second screen. For another example, the first application is chat software, and the second application is a file manager. If it is detected that the user triggers on the first screen a system event in which the chat software is started or operated, then a file manager associated with the chat software is searched based on the association relationship, and the file manager is started on the second screen.

In step S103, after the first application and the second application are started, the dual-screen terminal controls the second application or the first application to perform a corresponding operation based on an operation performed by the user on the first application or the second application.

Step S103 includes controlling, by the dual-screen terminal, the second application to perform a corresponding operation based on a state change of the first application. When the first application is a video player and the second application is a file manager, if it is detected that the user uses the video player to perform an operation on a video file, for example, the video player is in a state of opening the video file, the file manager is controlled to open a file directory where the video file is located. When the first application is chat software and the second application is a file manager, if it is detected that the user performs an operation on a function increase button in the chat software, i.e., the chat software experiences a state of clicking the function increase button, the dual-screen terminal controls the file manager to open a picture directory.

Step S103 includes controlling, by the dual-screen terminal, the first application to perform a corresponding operation based on a state change of the second application. When the first application is a video player and the second application is a file manager, if it is detected that the user uses the file manager to operate a file directory of a video file, the dual-screen terminal controls the video player to perform a corresponding operation on the video file, for example, if the video file in the file directory on the second screen is clicked, the video file on the first screen is correspondingly opened.

Those skilled in the art will appreciate that all or some of the steps of the method according to the above embodiments may be implemented by using a program to instruct related hardware. The program may be stored in a computer-readable storage medium. Further, an embodiment of the present disclosure also provides a storage medium having stored thereon a processor-executable program or instruction. The program or instruction, when being executed by the processor, implements the foregoing steps S101 to S103. The storage medium may be a ROM/RAM, a magnetic disk, an optical disk, or the like.

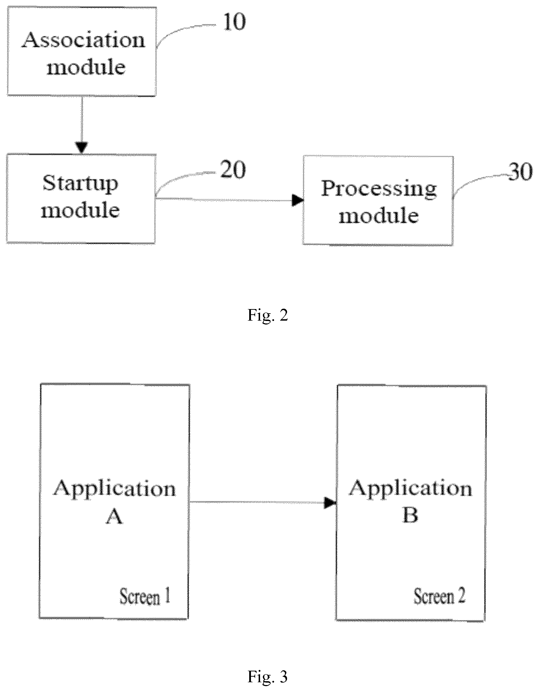

Fig. 2 is a block diagram of an application control device for a dual-screen terminal provided by an embodiment of the present disclosure. As shown in Fig. 2, the application control device includes an association module 10, a startup module 20, and a processing module 30.

The association module 10 is configured to acquire an association relationship between a first application and a second application in the dual-screen terminal. Further, before acquiring the association relationship, the association module 10 establishes an association relationship between the first application and the second application, the association relationship including an application association and a state association.

The startup module 20 is configured to start the second application on a second screen based on the association relationship when detecting that a user triggers a system event of the first application on a first screen.

The processing module 30 is configured to control the second application or the first application to perform a corresponding operation based on an operation performed by the user on the first application or the second application after the first application and the second application are started.

When the first application is a video player and the second application is a file manager, the startup module 20, if detecting that the user triggers on the first screen a system event in which the video player is started or operated, searches a file manager associated with the video player based on the association relationship acquired by the association module 10, and starts the file manager on the second screen. After the first application and the second application are started, the processing module 30, if detecting that the user uses the video player to perform an operation on a video file, controls the file manager to open a file directory where the video file is located; and the processing module 30, if detecting that the user uses the file manager to perform an operation on a file directory of a video file, controls the video player to perform a corresponding operation on the video file.

When the first application is chat software and the second application is a file manager, the startup module 20, if detecting that the user triggers on the first screen a system event in which the chat software is started or operated, searches a file manager associated with the chat software based on the association relationship acquired by the association module 10, and starts the file manager on the second screen. After the first application and the second application are started, the processing module, if detecting that the user performs an operation on a function increase button in the chat software, controls the file manager to open a picture directory; and the processing module, if detecting that the user performs an operation on a picture in the file manager, sends the picture to the chat software, and controls the chat software to display the picture in a current chat window.

An embodiment of the present disclosure further provides a device for dual-opening of associated applications based on a dual-screen terminal. The device includes a memory and a processor. The processor, when executing a program or instruction stored in the memory, implements the following steps:
acquiring an association relationship between a first application and a second application in the dual-screen terminal;
starting the second application on a second screen based on the association relationship if it is detected that a user triggers a system event of the first application on a first screen; and
controlling the second application or the first application to perform a corresponding operation based on an operation performed by the user on the first application or the second application after the first application and the second application are started.

Fig. 3 is a schematic diagram showing use of application control for a dual-screen terminal provided by an embodiment of the present disclosure. As shown in Fig. 3, the present embodiment is applicable to a terminal product having two display screens. By setting an association relationship between two pieces of software, when application A is opened on screen 1, application B is automatically opened on screen 2, and the second screen automatically enters an associated interface depending on different contents currently displayed by application A; meanwhile, if an operation associated with application A is operated on application B, application A will respond accordingly.

Specific steps are as follows.

In Step S301, a control module (implementing functions of each of the modules shown in Fig. 2) is started to acquire association data of an application.

In Step S302, application A is started, and the control module acquires a state of application A; the control module starts application B, and initializes application B according to the state of application A.

In Step S303, the user performs an operation on application A; the control module acquires a user operation and a state change of application A, and acquires a latest state thereof; and the control module automatically performs a related operation on application B according to the latest state of application A so to reach a predetermined associated state.

In Step S304, the user performs an operation on application B; the control module acquires a user operation and a state change of application B, determines whether the state change is associated with application A, and controls application A to perform a corresponding operation if the state change is associated with application A,.

Step S303 and step S304 may be implemented separately or in combination. When step S303 and step S304 are implemented in combination, an order of executing step S303 and step S304 is not limited in the present embodiment.

That is to say, the present embodiment is implemented by the control module. After the terminal is powered on, the control module is started and can acquire system events such as application startup and touch events and so on.

Further illustrations are provided below by means of two specific embodiments.

Embodiment 1: a video player is associated with a file manager.

In step S401, after a mobile phone is powered on, the control module is started. The control module acquires association data of a current application. The data may be preset in the mobile phone, or latest data may be acquired from a network server, or the data may be manually generated by the user. For example, a video player is associated with a file manager, and chat software is associated with a file manager. Illustrations are provided below with these two examples.

In step S402, the video player is started on screen 1; the control module detects that the video player is started; the control module then starts, by searching the associated data, an application (namely the file manager) associated with the video player on screen 2 after the video player is started.

The association data includes:
an application association: the video player is associated with the file manager;
state association: the opening of a certain file by the video player (including states such as pause of playback, fast forward, etc.) is associated with a directory where a currently playing file is located.

In step S403, when the video player opens a certain video file, the control module switches the file manager to the same directory of the video file according to the associated state.

In step S404, the file manager detects a click operation by the user. If the file is a video file, the control module passes information of the file to the video player, and the video player automatically plays the file.

Embodiment 2: chat software is associated with a file manager.

In step S501, after a mobile phone is powered on, the control module is started.

The control module acquires association data of a current application. The data may be preset in the mobile phone, or latest data may be acquired from a network server, or the data may be manually generated by the user. For example, a piece of chat software is associated with a file manager.

In step S502, the chat software is started on screen 1; the control module detects that the chat software is started; and the control module then starts, by searching the associated data, an application (namely the file manager) associated with the chat software on screen 2 after the chat software is started.

The association data includes:
the application associated with the chat software being a file manager; and
a state association: when the chat software clicks to share, the file manager opens a file classification list.

In step S503, the chat software clicks "+button", and the control module detects this event and switches, according to the associated state, the file manager to a view classified according to a common format or to a picture directory.

In step S504, the user performs an operation on the file manager and clicks a certain picture, and the control module sends the picture to a current chat window through a system sharing interface.

In Fig. 3, a triggering condition for opening associated application B is to open application A. In addition, it can also be the case that an operation on application A triggers application B. Further, different operations on application A trigger different associated applications. For example, application A is associated with application B and application C. If application A performs operation I, application B is started. Similarly, if application A performs operation II, then application C is started.

In summary, the embodiments of the present disclosure achieve the following technical effects.
1. According to the embodiments of the present disclosure, it is not necessary to adapt the applications individually, which solves the compatibility problem of different applications.
2. According to the embodiments of the present disclosure, different associated applications are displayed on different screens, which can improve the operation speed and improve experience of using dual-screen devices.

Although detailed description has been provided above with respect to the present disclosure, the present disclosure is not limited thereto, and various modifications may be made by those skilled in the art in accordance with principles of the present disclosure. Modifications made in accordance with the principles of the present disclosure thus shall all be construed as falling within the protection scope of the present disclosure.

### Industrial applicability

In the application control method for a dual-screen terminal according to the embodiments of the present disclosure, by associating two applications, when an application is opened on a screen, an associated application can be automatically opened on another screen, which can improve the operation speed of a user and improve user experience. In addition, according to the embodiments of the present disclosure, when an operation is performed on an application on one screen, an application on another screen will perform an associated operation, which can the operation speed of a user and improve user experience.

## Claims

1. An application control method for a dual-screen terminal, comprising:
acquiring an association relationship between a first application and a second application in a dual-screen terminal;
starting the second application on a second screen based on the association relationship, if the dual-screen terminal detects that a user triggers a system event of the first application on a first screen; and
controlling, by the dual-screen terminal, the second application or the first application to perform a corresponding operation based on an operation performed by the user on the first application or the second application, after the first application and the second application are started.

2. The method according to claim 1, wherein, the first application is a video player, and the second application is a file manager, wherein the step of starting the second application on a second screen based on the association relationship if the dual-screen terminal detects that a user triggers a system event of the first application on a first screen comprises:
searching a file manager associated with the video player based on the association relationship and starting the file manager on the second screen, if it is detected that the user triggers a system event in which the video player is started or operated.

3. The method according to claim 2, wherein, the step of controlling, by the dual-screen terminal, the second application or the first application to perform a corresponding operation based on an operation performed by the user on the first application or the second application comprises:
controlling, if it is detected that the user uses the video player to perform an operation on a video file, the file manager to open a file directory where the video file is located; and
controlling, if it is detected that the user uses the file manager to perform an operation on a file directory of a video file, the video player to perform a corresponding operation on the video file.

4. The method according to claim 1, wherein, the first application is chat software, and the second application is a file manager, wherein the step of starting the second application on a second screen based on the association relationship if the dual-screen terminal detects that a user triggers a system event of the first application on a first screen comprises:
searching a file manager associated with the chat software based on the association relationship and starting the file manager on the second screen, if it is detected that the user triggers a system event in which the chat software is started or operated.

5. The method according to claim 4, wherein, the step of controlling, by the dual-screen terminal, the second application or the first application to perform a corresponding operation based on an operation performed by the user on the first application or the second application comprises:
controlling the file manager to open a picture directory, if it is detected that the user performs an operation on a function increase button in the chat software; and
sending, if it is detected that the user performs an operation on a picture in the file manager, the picture to the chat software and controlling the chat software to display the picture in a current chat window.

6. An application control device for a dual-screen terminal, comprising:
an association module, configured to acquire an association relationship between a first application and a second application in a dual-screen terminal;
a startup module, configured to start the second application on a second screen based on the association relationship, if the dual-screen terminal detects that a user triggers a system event of the first application on a first screen; and
a processing module, configured to control the second application or the first application to perform a corresponding operation based on an operation performed by the user on the first application or the second application, after the first application and the second application are started.

7. The device according to claim 6, wherein, the first application is a video player, and the second application is a file manager, wherein the startup module, if detecting that the user triggers on the first screen a system event in which the video player is started or operated, searches a file manager associated with the video player based on the association relationship and starts the file manager on the second screen.

8. The device according to claim 7, wherein, the processing module, if detecting that the user uses the video player to perform an operation on a video file, controls the file manager to open a file directory where the video file is located; and the processing module, if detecting that the user uses the file manager to perform an operation on a file directory of a video file, controls the video player to perform a corresponding operation on the video file.

9. The device according to claim 6, wherein, the first application is chat software, and the second application is a file manager, wherein, the startup module, if detecting that the user triggers on the first screen a system event in which the chat software is started or operated, searches a file manager associated with the chat software based on the association relationship and starts the file manager on the second screen.

10. The device according to claim 9, wherein, the processing module, if detecting that the user performs an operation on a function increase button in the chat software, controls the file manager to open a picture directory; and the processing module, if detecting that the user performs an operation on a picture in the file manager, sends the picture to the chat software and controls the chat software to display the picture in a current chat window.

11. A storage medium comprising a program stored thereon, wherein the program, when being executed, implements the method according to any of claims 1 to 5.
